# EUROPEAN PATENT APPLICATION

(11) **EP 4 672 637 A1**
(43) Date of publication of application: **31.12.2025**
(21) Application number: 24184302.8
(22) Date of filing: 25.06.2024
(51) Int. Cl.: H04B 10/079, H04B 10/272, H04J 14/02

(54) **FREQUENCY ACQUISITION IN A PASSIVE OPTICAL NETWORK**

(71) Applicant: Nokia Solutions and Networks Oy, 02610 Espoo (FI)
(72) Inventor: ADIB, Md Mosaddek Hossain, 70469 Stuttgart (DE); BONK, Rene, 70469 Stuttgart (DE)
(74) Representative: IP HILLS NV

(57) **Abstract**

Example embodiments describe an optical line terminal, OLT (210), configured to communicate in a passive optical network, PON (200), with optical network units, ONUs (131 - 133) that transmit optical signals to the OLT at respective centre transmission frequencies (142, 143, 144) anywhere within a frequency band (141); wherein the OLT (210) comprises a coherent optical receiver (211) and a fast tuneable laser (212), wherein the coherent optical receiver is configured to convert received optical signals (213, 220) to electrical signals (214) by means of a local oscillator laser signal (217) generated by the fast tuneable laser; wherein the OLT (210) is configured to receive, from one or more ONUs (131 -133), an optical frequency acquisition signal (221) transmitted at the respective centre transmission frequencies (142 - 144); and wherein the OLT further comprises means (202) configured to perform: tuning (216) the fast tuneable laser (212) to respective frequencies (231) within the frequency band (141) to scan (230) the frequency band for optical frequency acquisition signals (221); obtaining (215), at the respective frequencies (231), a parameter value indicative of an electrical power (240) of the electrical signal (214) converted by the coherent optical receiver (211); and determining the respective centre transmission frequencies (142 - 144) of the one or more ONUs as the frequency to which the fast tuneable laser (212) is tuned when the parameter value exceeds an upper threshold (241) or drops below a lower threshold.

## Description

### Field of the Invention

Various example embodiments relate to an optical line terminal, OLT, and an optical network unit, ONU, for a passive optical network, PON, in particular an OLT configured to acquire the transmission frequency of one or more ONUs that transmit optical signal to the OLT anywhere within a frequency band.

### Background of the Invention

It is expected that advanced modulation techniques such as in-phase and quadrature modulation, IQM, will be required to enable the higher data rates, e.g. larger than 100Gbit/s, of future passive optical networks, PONs, also referred to as very high-speed passive optical networks, VHSP. Receiving and decoding such advanced optical signals requires coherent optical receivers, which can extract the amplitude, phase, and polarization of an optical signal. To this end, coherent optical receivers comprise a local oscillator that generates a laser signal having a frequency that matches the transmission frequency of the optical signal being received by the coherent optical receiver. Mixing this local oscillator laser signal with the received optical signal creates interference patterns wherefrom the amplitude, phase, and polarization information can be extracted.

In point-to-point networks, a deterministic laser such as a calibrated external cavity laser is typically employed in the transmitter that transmits optical signals at a fixed transmission frequency. This avoids variations in the frequency of the transmitted optical signal, thereby enabling reliable coherent reception as the frequency of the local oscillator signal can be matched to the invariant transmission frequency of the deterministic laser. However, such deterministic lasers have a high cost.

In point-to-multipoint networks such as PONs, a large number of transmitters, i.e. optical network units, ONUs, transmit optical signals to a central receiver, i.e. an optical line terminal, OLT. The excessive cost of the ONUs when providing a deterministic laser within each ONU prohibits the use of coherent optical receivers in the OLT, and, thus, the use of high-speed or higher order modulation techniques such as IQM in PONs.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to enable cost-efficient and reliable coherent reception within a passive optical network, PON, wherein optical network units, ONUs, transmit upstream optical signals to an optical line terminal, OLT, at respective centre transmission frequencies anywhere within a frequency band.

This object is achieved, according to a first example aspect of the present disclosure, by an optical line terminal, OLT, configured to communicate in a passive optical network, PON, with optical network units, ONUs that transmit optical signals to the OLT at respective centre transmission frequencies anywhere within a frequency band; wherein the OLT comprises a coherent optical receiver and a fast tuneable laser, wherein the coherent optical receiver is configured to convert received optical signals to electrical signals by means of a local oscillator laser signal generated by the fast tuneable laser; wherein the OLT is configured to receive, from one or more ONUs, an optical frequency acquisition signal transmitted at the respective centre transmission frequencies; and wherein the OLT further comprises means configured to perform:
- tuning the fast tuneable laser to respective frequencies within the frequency band to scan the frequency band for optical frequency acquisition signals;
- obtaining, at the respective frequencies, a parameter value indicative of an electrical power of the electrical signal converted by the coherent optical receiver; and
- determining the respective centre transmission frequencies of the one or more ONUs as the frequency to which the fast tuneable laser is tuned when the parameter value exceeds an upper threshold or drops below a lower threshold.

The ONUs transmit upstream optical signals to the OLT at respective centre transmission frequencies. The respective centre transmission frequencies can have a value anywhere within a frequency band. The centre transmission frequency may vary between different ONUs using the same type of transmitter laser, e.g. due to manufacturing inaccuracies or tolerances. Alternatively or complementary, the centre transmission frequency may vary between subsequently transmitted upstream optical signals by the same ONU, e.g. due to variations in ambient temperature. The range of the frequency band may thus be defined by the types of transmitter lasers and their respective characteristics. The range of the frequency band may, for example, be 400 GHz. Such transmitter lasers that can not ensure a predetermined transmission frequency may be referred to as non-deterministic lasers, e.g. a distributed feedback laser. Non-deterministic lasers are substantially cheaper compared to deterministic lasers that can ensure a predetermined transmission frequency. Transmission frequency can also be referred to as emission frequency.

In order to reliably receive the upstream optical signals by the coherent optical receiver at the OLT, the local oscillator laser signal should match the centre transmission frequency of the upstream optical signal being received. As the non-deterministic lasers of the ONUs may transmit optical signals anywhere within the frequency band it is desirable that the OLT can determine or acquire the centre transmission frequency of the ONUs.

To this end, the OLT is configured to receive, from one or more ONUs, an optical frequency acquisition signal for determining, by the OLT, the centre transmission frequency. The optical frequency acquisition signal is transmitted at the centre transmission frequency of the respective ONU. Thus, the ONUs are configured to transmit a dedicated optical signal that allows the OLT to determine their centre transmission frequency, i.e. the optical frequency acquisition signal. The ONUs may transmit the optical frequency acquisition signal prior to some or all of the upstream optical signals. As the optical frequency acquisition signal is transmitted at the centre transmission frequency of the ONU, the OLT can determine this centre transmission frequency from the optical frequency acquisition signal. To this end, the OLT is configured to detect optical frequency acquisition signals.

This is achieved by providing a fast tuneable laser as the local oscillator of a coherent optical receiver. The fast tuneable laser generates a laser signal at an adjustable frequency that is used by the coherent optical receiver to convert received optical signals to electrical signals. The fast tuneable laser may be tuned to a desired frequency by, for example, adjusting the voltage, current, and/or temperature of the fast tuneable laser. The frequency of the fast tuneable laser can be adjusted relatively fast, e.g. within around 2 ns. By using a fast tuneable laser as the local oscillator, the frequency of the local oscillator laser signal can be controlled or adjusted.

As the optical frequency acquisition signals may have a frequency anywhere within the frequency band, the OLT comprises means configured to scan or sweep the frequency band. This is achieved by tuning the fast tuneable laser to respective frequencies within the frequency band. The entire frequency band may, but need not, be scanned. For example, a frequency band may be scanned at an accuracy of 2GHz. The means may, for example, be a controller or control unit comprising at least one processor and at least one memory.

The frequency to which the fast tuneable laser is tuned affects the electrical power of the electrical signal converted by the coherent optical receiver. As such, monitoring a parameter value indicative of the electrical power of the converted electrical signal allows detecting when the fast tuneable laser is tuned to a frequency that matches the frequency of the incoming optical signal. This allows determining the centre transmission frequency of an ONU as the frequency to which the fast tuneable laser is tuned if an optical frequency acquisition signal is being received. Depending on the monitored parameter, it's value will spike or drop upon matching the frequency of the fast adjustable laser with the centre transmission frequency of an optical frequency acquisition signal. The parameter value may, for example, be a gain current of a transimpedance amplifier within the coherent receiver, a received signal strength indicator of a transimpedance amplifier within the coherent receiver, a received signal strength measured at an analogue-to-digital converter, or any other parameter value indicative for the electrical power of the electrical signal.

This allows determining the centre transmission frequencies of the respective ONUs within a PON without prior knowledge on the used lasers within the ONUs. It is an advantage that non-deterministic lasers can be used within the ONUs which are cheaper than deterministic lasers typically needed for reliable coherent reception. It is a further advantage that this reliable coherent reception can enable the implementation of advanced modulation techniques, e.g. IQM, in PONs. It is a further advantage that no additional optical components are required within the OLT, thereby not substantially increasing the size or complexity of the circuitry within the OLT. It is a further advantage that the centre transmission frequency can be determined without splitting the received upstream optical signal, which avoids splitter losses.

According to an example embodiment, the means may further be configured to perform interrupting the scanning of the frequency band when the parameter value exceeds the upper threshold or drops below the lower threshold so as to receive an upstream optical signal transmitted by the ONU subsequent to the optical frequency acquisition signal.

The OLT may thus be configured to scan the frequency band for optical frequency acquisition signals until an optical frequency acquisition signal is detected, i.e. when the parameter value exceeds the upper threshold or drops below the lower threshold. As the frequency to which the fast tuneable laser is tuned at that time corresponds to the transmission frequency of the ONU, the OLT may be configured to stop scanning the frequency band by maintaining the frequency of the fast tuneable laser at the determined centre transmission frequency of the ONU. This allows receiving an upstream optical signal transmitted by the ONU following the optical frequency acquisition signal. The ONUs may thus, for example, be configured to transmit an optical frequency acquisition signal followed by an upstream optical signal comprising data. In doing so, the OLT can first determine the centre transmission frequency and thereafter receive data without any prior knowledge on the centre transmission frequency of the ONU and without missing any valuable data within the upstream optical signal.

According to an example embodiment, the means may further be configured to perform determining the respective centre transmission frequencies of the one or more ONUs by peak searching the obtained parameter values after tuning the fast tuneable laser to the respective frequencies within the frequency band.

The means may thus be configured to tune the fast tuneable laser to the respective frequencies within the frequency band while logging the parameter values at the respective frequencies. The means may then determine the respective centre transmission frequencies only after tuning the fast tuneable laser to the respective frequencies, i.e. after completing a sweep of the frequency band. This may be achieved by peak searching the logged parameter values to identify a local maximum or by peak searching the additive inverse of logged parameter values to identify a local minimum.

If a single optical frequency acquisition signal is received during a sweep of the frequency band, the means may be configured to tune the fast tuneable laser to the frequency of said optical frequency acquisition signal to subsequently receive an upstream optical signal transmitted by the ONU. Alternatively, if two or more optical frequency acquisition signals are received during one sweep, the means may be configured to tune the fast tuneable laser to the frequency of the optical frequency acquisition signal that is received first or identified first by the peak searching algorithm. This may depend on the order in which the frequency band is swept.

According to an example embodiment, the means may further be configured to scan the frequency band repeatedly during a quiet window.

The quiet window refers to the window of time during which existing ONUs within a PON cease upstream transmission such that new ONUs wishing to join the PON can do so without interfering with ongoing traffic. To this end, new ONUs may transmit the optical frequency acquisition signal followed by a typical serial number physical layer operations, administration and maintenance, PLOAM, message during the quiet window. By repeatedly scanning the frequency band during the quiet window, the optical frequency acquisition signal can be detected, and the centre transmission frequency of the new ONU can be determined. This determined centre transmission frequency can then be used to receive the serial number PLOAM message, which is also transmitted at the centre transmission frequency. In doing so, new ONUs using cheap non-deterministic lasers can join a PON with an OLT implementing coherent reception. It is an advantage that the OLT does not require prior knowledge of the new ONUs centre transmission frequency.

According to an example embodiment, the means may further be configured to scan at least a portion of the frequency band at the start of an upstream transmission opportunity allocated to a respective ONU.

Upstream transmission opportunities are timeslots assigned to the respective ONUs for transmitting upstream optical signals to the OLT. The ONUs may be configured to transmit the optical frequency acquisition signal before some or all of the upstream optical signals. By scanning the frequency band at the start of the upstream transmission opportunities, the OLT can determine the centre transmission frequency of the subsequent upstream optical signal. This has the advantage that reliable coherent reception is possible even if the centre transmission frequency of the ONU changes between subsequent transmission, e.g. due to changes in ambient temperature.

According to an example embodiment, the means may further be configured to perform assigning a determined centre transmission frequency to an ONU for receiving future upstream optical signals from the ONU transmitted at the centre transmission frequency.

In other words, the means may further be configured to store or save the determined centre transmission frequency for a respective ONU such that future upstream optical signals from the ONU can be received by tuning the fast tuneable laser to the stored centre transmission frequency. For example, the determined centre transmission frequency for an ONU may be stored in a memory, e.g. in a look up table, where it is related to an identifier of the ONU, e.g. the serial number. At the start of the next upstream transmission opportunity allocated to said ONU identifier, the means may tune the fast tuneable laser to the transmission frequency stored in the look up table.

According to an example embodiment, the means may further be configured to scan a portion of the frequency band enveloping the centre transmission frequency previously assigned to the ONU allocated to the upstream transmission opportunity.

In other words, only a portion of the frequency band may be scanned instead of scanning the entire frequency band. The portion of the frequency band that is scanned may surround or enclose the centre transmission frequency that is currently assigned to the ONU. For example, at the start of a next upstream transmission opportunity allocated to an ONU identifier, the means may first scan some frequencies around the centre transmission frequency of the ONU. This allows determining the centre transmission frequency of the subsequent upstream optical signal without scanning the entire frequency band, which is faster and more efficient. This has the advantage that reliable coherent reception is possible even if the centre transmission frequency of the ONU changes between subsequent transmission, e.g. due to changes in ambient temperature.

According to an example embodiment, the means may further be configured to perform updating the centre transmission frequency assigned to the ONU.

In other words, the means may be configured to adjust or overwrite the centre transmission frequency of an ONU stored within the memory to the latest determined centre transmission frequency for the ONU.

According to an example embodiment, the optical frequency acquisition signal may have a time duration that is larger than a scanning time for scanning the entire frequency band.

The time duration of the optical frequency acquisition signals may, for example, be four times larger than the scanning time for scanning the entire frequency band. For example, the scanning time of a 400GHz frequency band may be 200ns if the frequency of the fast tuneable laser can be adjusted every 2ns and the scanning accuracy is 2GHz. In this example, the time duration of the optical frequency acquisition signals may thus be 800ns. This allows avoiding that the optical acquisition signals are missed by the scanning of the OLT, i.e. by the fast tuneable laser.

According to an example embodiment, the optical frequency acquisition signal may be a continuous wave signal.

This has the advantage that the effect on the monitored parameter value is more predictable and similar at every centre transmission frequency, allowing to set a fixed threshold to detect optical frequency acquisition signals.

According to a second example aspect, the invention relates to an optical network unit, ONU, configured to communicate in a passive optical network, PON, with an optical line terminal, OLT; wherein the ONU is configured to transmit optical signals to the OLT at a centre transmission frequency anywhere within a frequency band; and wherein the ONU is further configured to transmit, preceding an upstream optical signal, an optical frequency acquisition signal for determining, by the OLT, the centre transmission frequency of a subsequent upstream optical signal.

According to an example embodiment, the ONU may further be configured to transmit the subsequent upstream optical signal a waiting period after completing the transmission of the optical frequency acquisition signal.

In other words, the optical frequency acquisition signal and the subsequent upstream optical signal may be transmitted with a gap between them during which no transmission occurs. This gap or waiting period can allow the means of the OLT sufficient time to determine the centre transmission frequency and determine the appropriate parameters to configure the fast tuneable laser to receive the subsequent optical signal.

According to an example embodiment, the ONU may further be configured to transmit the optical frequency acquisition signal with a random delay, or to transmit the optical frequency acquisition signal with a random frequency shift.

If two or more ONUs are located at the same distance to the OLT and transmit at the same centre transmission frequency, there will be a conflict or interference of their transmissions. To avoid this, one or more ONUs may add a random delay to the transmission of the optical frequency acquisition signal such that the signals do not arrive simultaneously at the OLT. Alternatively, one or more ONUs may add a random frequency shift to the optical frequency acquisition signal to distinguish the signals.

According to an example embodiment, the ONU may further be configured to transmit an optical frequency acquisition signal that has a duration that is larger than a scanning time for scanning the entire frequency band.

According to an example embodiment, the ONU may further be configured to transmit a continuous wave signal as the optical frequency acquisition signal.

According to a third example aspect, the invention relates to a computer-implemented method for determining a centre transmission frequency of one or more optical network units, ONUs, in a passive optical network, PON; wherein the one or more ONUs transmit optical signals to an optical line terminal, OLT, at respective centre transmission frequencies anywhere within a frequency band; and wherein the OLT comprises a coherent optical receiver and a fast tuneable laser, wherein the coherent optical receiver is configured to convert received optical signals to electrical signals by means of a local oscillator laser signal generated by the fast tuneable laser; and wherein the ONUs are further configured to transmit, preceding an upstream optical signal, an optical frequency acquisition signal for determining, by the OLT, the centre transmission frequency of a subsequent upstream optical signal; the computer-implemented method comprising:
- tuning the fast tuneable laser to respective frequencies within the frequency band;
- obtaining, at the respective frequencies, a parameter value indicative of an electrical power of the electrical signal converted by the coherent optical receiver;
- determining a centre transmission frequency as the frequency to which the fast tuneable laser is tuned when the electrical power exceeds an upper threshold or drops below a lower threshold.

According to a fourth aspect, the invention relates to a data processing system configured to perform the computer-implemented method according to the third aspect.

According to a fifth aspect, the invention relates to a computer program product comprising computer-executable instructions which, when the program is executed by a computer, cause the computer to perform the computer-implemented method according to the third aspect.

### Brief Description of the Drawings

Fig. 1 shows a schematic block diagram of an example point-to-multipoint optical network, in particular a passive optical network;
Fig. 2 shows an example embodiment of an optical line terminal, OLT, configured to determine the centre transmission frequencies of respective optical network units, ONUs, within a passive optical network, PON;
Fig. 3 shows an example embodiment of determining the centre transmission frequency of a new or joining ONU that wants to join the PON;
Fig. 4 shows an example embodiment of determining the centre transmission frequency of an existing ONU within a PON; and
Fig. 5 shows a suitable computing system enabling to implement embodiments of the computer-implemented method for determining a centre transmission frequency of one or more ONUs.

### Detailed Description of Embodiment(s)

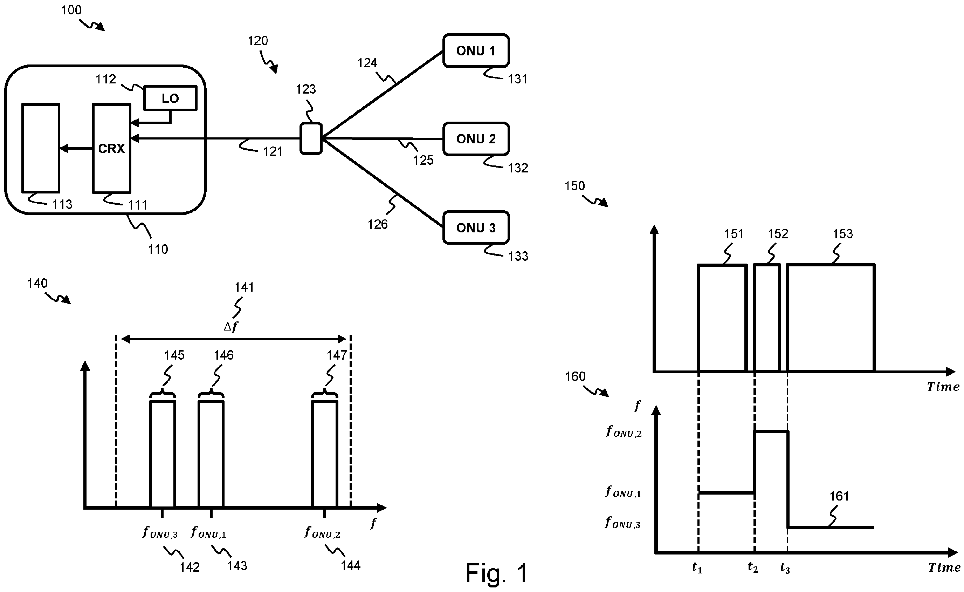

Fig. 1 shows a schematic block diagram of an example point-to-multipoint optical network 100, in particular a passive optical network, PON. The optical network 100 comprises an optical line terminal 110, OLT, and a plurality of optical network units, ONUs 131, 132, 133, connected via an optical distribution network, ODN 120. In this example, the OLT 110 is connected to three ONUs 131, 132, 133, however, the OLT 110 may be connected to fewer or more endpoints. The ODN 120 has a tree structure comprising an optical feeder fibre 121, one or more passive optical splitters/multiplexors 123, and a plurality of optical distribution fibres or drop fibres 124, 125, 126 that connect the splitter/multiplexor 123 to the respective ONUs 131, 132, 133. In the downstream, the passive optical splitter/multiplexor 123 splits the optical signal coming from the OLT 110 into lower power optical signals for the connected ONUs 131, 132, 133, while in the upstream direction, the passive optical splitter/multiplexor 123 multiplexes the optical signals coming from the connected ONUs 131, 132, 133 into a burst signal for the OLT 110.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, a next generation passive optical network, NG-PON, or a very high-speed passive optical network, VHSP. The passive optical network 100 may implement time-division multiplexing, TDM, or time- and wavelength-division multiplexing, TWDM.

Advanced modulation techniques such as in-phase and quadrature modulation, IQM, can further increase the achievable data rates within the PON 100, e.g. to and beyond 100Gbit/s. However, receiving and decoding such signals requires coherent optical receivers, which can extract the amplitude, phase, and polarization of an optical signal. It is thus desirable to implement coherent optical receivers into PONs, in particular in the OLT.

Fig. 1 shows an example of an OLT 110 comprising a coherent optical receiver 111 and a local oscillator 112. The coherent optical receiver 111 receives upstream optical signals transmitted by the ONUs 131 - 133 to the OLT 110. The local oscillator 112 generates an optical signal that is provided to the coherent optical receiver 111. By mixing the local oscillator laser signal with the received optical signal, interference patterns are obtained that allow extracting the amplitude, phase, and polarization information. To this end, the frequency of the local oscillator signal should substantially match the frequency of the received upstream optical signal.

To achieve this, a first solution could be to use deterministic lasers as the transmitters in the respective ONUs 131 - 133. A deterministic laser such as a calibrated external cavity laser can ensure that optical signals are transmitted at a predetermined transmission frequency, i.e. at a fixed transmission frequency. Calibrated thus refers here to calibrated in terms of transmission frequency and laser parameters, e.g. temperature and bias current. This avoids variations in the frequency of the transmitted optical signal. In doing so, the ONUs 131 - 133 would all transmit optical signals at substantially the same frequency. This would allow selecting a local oscillator 112 that generates a local oscillator laser signal that matches the transmission frequencies of all ONUs 131 - 133. However, providing a deterministic laser within each of the large number of ONUs within a PON is an undesired solution, as it is prohibitively expensive.

It is more desirable to implement non-deterministic lasers in the respective ONUs 131 - 133, which are cheaper compared to deterministic lasers. However, non-deterministic lasers, such as distributed feedback lasers, can not ensure that optical signals are transmitted at a predetermined transmission frequency. Fig. 1 further shows an example 140 of the centre transmission frequencies of ONUs 131 - 133 using non-deterministic lasers as transmitters. ONU 131 may transmit optical signals at a first centre transmission frequency *f*_{*ONU,*1} 143, ONU 132 may transmit optical signals at a second centre transmission frequency *f*_{*ONU,*2} 144, and ONU 133 may transmit optical signals at a third centre transmission frequency *f*_{*ONU,*3} 142. The respective centre transmission frequencies 142 - 144 can have a value anywhere within a frequency band 141, i.e. there is a frequency uncertainty. The centre transmission frequencies 142 - 144 may vary even if the ONUs 131 - 133 use the same type of transmitter laser, e.g. due to manufacturing inaccuracies or tolerances.

It is thus a challenge to enable coherent reception in PONs using non-deterministic lasers as transmitters in the ONUs 131 - 133, as the local oscillator laser signal has to match the centre transmission frequency 142 - 144 of the respective ONUs 131 - 133 upon receiving their optical signals at the OLT 110.

This is a problem when a new ONU (not shown in Fig. 1) wants to join the PON 100, e.g. during a ranging process or a registration process, as the OLT 110 is unaware of the centre transmission frequency of the new ONU and, thus, may not correctly receive the necessary optical signals to successfully add the new ONU to the network, e.g. a serial number PLOAM messages.

The frequency uncertainty of the ONUs 131 - 133 is also a problem during upstream communication by existing ONUs within the PON. The upstream communication in PONs is scheduled in upstream transmission opportunities, i.e. timeslots 151 - 153, during which the respective ONUs 131 - 133 are allowed to transmit upstream optical signals to the OLT 110. The frequency of the local oscillator laser signal should thus match the centre transmission frequency of the transmitting ONU during its upstream transmission opportunity 151, - 153, as illustrated in 160. However, the respective centre transmission frequencies 142 - 144 may vary between subsequently transmitted upstream optical signals by the same ONU 131 - 133, e.g. due to variations in temperature. For example, centre transmission frequency 143 may decrease between subsequent transmissions when the ambient temperature or transmitter temperature at ONU 131 increases. As such, a static centre transmission frequency associated with a certain ONU, e.g. provisioned at the OLT by an operator, may not result in reliable coherent reception.

It is thus desirable that the OLT 110 can dynamically determine or acquire the centre transmission frequencies 142 - 144 of the ONUs, as non-deterministic lasers within the ONUs may transmit optical signals anywhere within a frequency band 141.

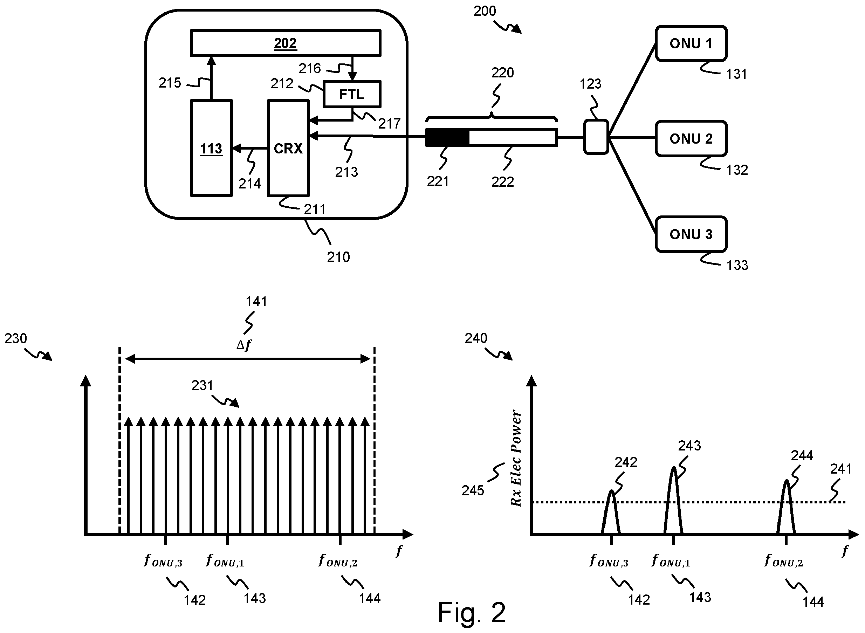

Fig. 2 shows an example embodiment of an OLT 210 configured to determine the centre transmission frequencies 142 - 144 of respective ONUs 131 - 133 within a PON 200. To this end, the OLT 210 comprises a coherent optical receiver 211, a fast tuneable laser 212, and a controller or control unit 202. The fast tuneable laser 212 functions as the local oscillator of the coherent optical receiver 211. In other words, the fast tuneable laser 212 is configured to generate a laser signal 217 that is provided to the coherent optical receiver 211 for converting optical signals 213 received from the ONUs 131 - 133 to electrical signals 214. The frequency of the laser signal 217 generated by the fast tuneable laser 212 is adjustable, i.e. the fast tuneable laser 212 can be tuned to a desired frequency. This can be achieved by adjusting, for example, the voltage, current, and/or temperature of the fast tuneable laser 212. The frequency of the fast tuneable laser 212 is adjusted by the control unit 202, e.g. by sending a control signal 216 to the fast tuneable laser 212. The frequency of the fast tuneable laser 212 can be adjusted relatively fast, e.g. within around 2 ns. By using a fast tuneable laser as the local oscillator, the frequency of the local oscillator laser signal 217 can thus be controlled or adjusted. A fast tuneable laser is sometimes also referred to as a fast lambda (λ) tuneable laser.

The OLT 210 is configured to receive, from one or more ONUs 131 - 133, an optical frequency acquisition signal 221 for determining, by the OLT 210, the centre transmission frequency 142 - 144 of the ONUs 131 - 133. The optical frequency acquisition signal 221 is transmitted at the centre transmission frequency 142 - 144 of the respective ONUs 131 - 133. In other words, the ONUs 131 - 133 are configured to transmit a dedicated optical signal that allows the OLT 210 to determine their centre transmission frequency 142 - 144, i.e. the optical frequency acquisition signal 221. The optical frequency acquisition signal 221 may be a continuous wave signal. The optical frequency acquisition signal 221 may be substantially free of valuable data, i.e. information that an ONU 131 - 133 wishes to communicate upstream to the OLT 210 except for the centre transmission frequency of the ONUs 131 - 133. The ONUs 131 - 133 may be configured to transmit the optical frequency acquisition signal 221 prior to some or all of the upstream optical signals 222 comprising valuable data.

The frequency to which the fast tuneable laser 212 is tuned affects the electrical power of the electrical signal 214 converted by the coherent optical receiver 211. As such, monitoring a parameter value indicative of the electrical power of the converted electrical signal 214 allows detecting when the fast tuneable laser 212 is tuned to a frequency that matches the frequency of the incoming optical signal 213. Matching the frequency of the fast tuneable laser 212 to the frequency of an incoming optical frequency acquisition signal 221 thus allows the OLT to determine or acquire the centre transmission frequency 142 - 144 of an ONU 131 - 133.

To this end, the control unit 202 is configured to tune 230 the fast tuneable laser 212 so as to scan or sweep the frequency band 141 wherein the ONUs 131 - 133 may transmit the optical frequency acquisition signal 221. This is achieved by tuning the fast tuneable laser 212 to respective frequencies 231 within the frequency band 141. The entire frequency band 141 may, but need not, be scanned. The range of the frequency band 141 may be defined by the types of transmitter lasers used in the ONUs 131 - 133 and their respective characteristics. The range of the frequency band may, for example, be 400 GHz. It will be apparent that tuning 230 the frequency of the fast tuneable laser 212 to the respective frequencies 231 of the frequency band 141 may be performed in any order such as, for example, from the lowest frequency to the highest frequency in the frequency band 141, from the highest frequency to the lowest frequency within the frequency band 141, in a random order, or according to an optimized order determined by an optimization algorithm.

At the respective frequencies 231 to which the fast tuneable laser 212 is tuned, the control unit 202 then obtains 215 a parameter value indicative of an electrical power 240 of the electrical signal 214. The parameter value may, for example, be a gain current of a transimpedance amplifier within the coherent receiver, a received signal strength indicator of a transimpedance amplifier within the coherent receiver, a received signal strength measured at an analogue-to-digital converter, or any other parameter value indicative for the electrical power of the electrical signal.

Regardless of the monitored parameter, the electrical power 240 of the electrical signal 214 reaches a local maximum 242, 243, 244 upon tuning the fast tuneable laser 212 to a frequency corresponding to the frequency of an incoming optical frequency acquisition signal 221, i.e. the respective centre transmission frequencies 142 - 144. For example, the electrical power 243 of signal 214 spikes when the fast tuneable laser 212 is tuned to the centre transmission frequency *f*_{*ONU,*1} 143 of ONU 131 while the coherent optical receiver 211 is receiving the optical frequency acquisition signal 221 transmitted by ONU 131.

It will be apparent that, depending on the parameter value that is monitored by control unit 202, the parameter value may spike or drop upon matching the frequency of the fast adjustable laser 212 with the transmission frequency of an optical frequency acquisition signal 221. As such, control unit 202 is configured to determine the centre transmission frequency 142 - 144 of one or more ONUs 131 - 133 as the frequency to which the fast tuneable laser 212 is tuned when the parameter value exceeds an upper threshold 241 or drops below a lower threshold (not shown in Fig. 2). It will be apparent that the centre transmission frequency of the one or more ONUs may be defined by the parameters of the fast tuneable laser, e.g. voltage, current, temperature. As such, 'determining the centre transmission frequency' may refer to obtaining the parameters of the fast tuneable laser corresponding to the centre transmission frequency without obtaining an explicit frequency value, e.g. expressed in Hz, for the centre transmission frequency.

This allows determining the centre transmission frequencies 142 - 144 of the respective ONUs 131 - 133 within a PON 200 without prior knowledge on the used lasers within the ONUs. It is an advantage that non-deterministic lasers can be used within the ONUs, which are cheaper than deterministic lasers typically needed for reliable coherent reception. It is a further advantage that this reliable coherent reception can enable the implementation of advanced modulation techniques, e.g. IQM, in PONs. It is a further advantage that no additional optical components are required within the OLT, thereby not substantially increasing the size or complexity of the circuitry within the OLT. It is a further advantage that the centre transmission frequency can be determined without splitting the received upstream optical signal, which avoids splitter losses.

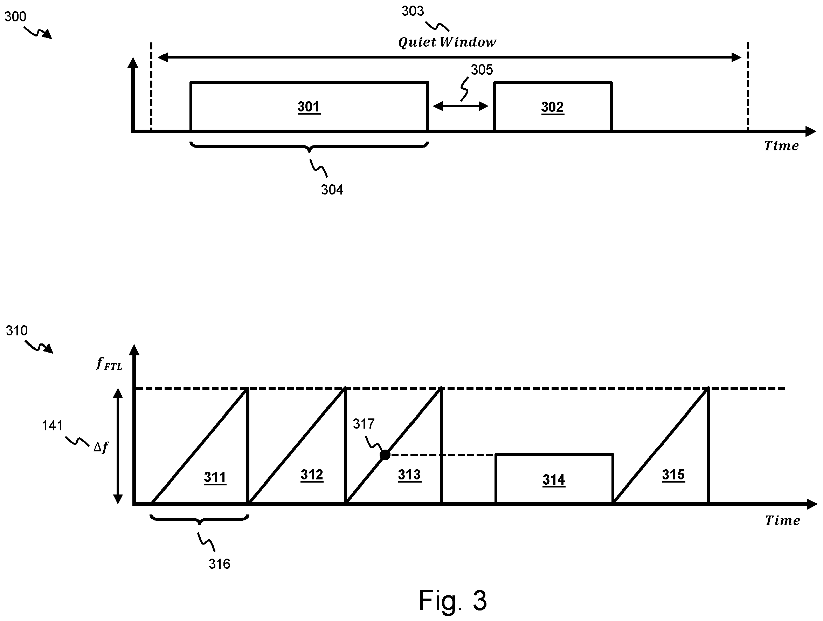

Fig. 3 shows an example embodiment of determining the centre transmission frequency of a new ONU that wants to join the PON. New ONUs, also referred to as joining ONUs, are typically only allowed to exchange the necessary optical signals with the OLT to join the PON during a quiet window 303. The quiet window 303 refers to the window of time during which existing ONUs within a PON cease upstream transmission such that new ONUs can join the PON without interfering with ongoing traffic. New ONUs typically transmit a serial number PLOAM message to the OLT to initiate the registration process. The serial number PLOAM message comprises an identifier of the ONU, i.e. the serial number of the ONU. This allows the OLT to identify and distinguish the new ONU and start the necessary procedures to integrate it into the PON.

According to example embodiments, the ONUs are configured to transmit the optical frequency acquisition signal 301 preceding some or all of the upstream optical signals 302. During the quiet window 303, new ONUs may thus transmit the optical frequency acquisition signal 301 followed by a serial number PLOAM message 302. The optical frequency acquisition signal 301 and the subsequent upstream optical signal 302, i.e. the serial number PLOAM message, may be transmitted with a gap 305 between them during which no transmission occurs. This gap 305 or waiting period 305 can ensure that the control unit of the OLT has sufficient time to determine the centre transmission frequency and the appropriate parameters for the fast tuneable laser to receive the serial number PLOAM message.

The control unit of the OLT may further be configured to scan 311, 312, 313, 315 the frequency band 141 repeatedly during the quiet window 303. In other words, throughout the quiet window 303, the control unit of the OLT may iteratively tune the frequency of the fast tuneable laser to the respective frequencies within the frequency band 141 and obtain the parameter value. This is illustrated by graph 310 in Fig. 3, which shows the frequency *f_{FTL}* to which the fast tuneable laser is tuned as a function of time during the quiet window 303.

The scanning 311, 312, 313 of the frequency band may be interrupted when the parameter value exceeds the upper threshold or drops below the lower threshold. The OLT may thus be configured to scan 311, 312, 313 the frequency band 141 for an optical frequency acquisition signal 301 until one is detected. As the frequency to which the fast tuneable laser is tuned at that time corresponds to the transmission frequency of the ONU, the OLT may be configured to stop scanning the frequency band by maintaining the frequency of the fast tuneable laser at the determined centre transmission frequency of the ONU. For example, scanning 313 may be interrupted at point 317 by maintaining the associated *f_{FTL}.* This allows receiving the serial number PLOAM message 302 subsequently transmitted by an ONU following the optical frequency acquisition signal 301.

Alternatively, the control unit may determine the centre transmission frequency of the ONU after completing a scan 311, 312, 313 of the frequency band 141. During a frequency band scan 313 or sweep 313, the control unit may log the obtained parameter values. After completing the scan, a peak searching algorithm may be executed on the obtained parameter values to identify a peak which corresponds to receiving an optical frequency acquisition signal. Depending on the parameter value that is monitored, the peak searching may be performed on the logged parameter values or on the additive inverse of the logged parameter values.

After completing a sweep 313 during which a single optical frequency acquisition signal 301 is detected, the control unit may set the frequency of the fast tuneable laser to the determined centre transmission frequency to receive 314 the serial number PLOAM message 302. If two or more optical frequency acquisition signals are received during one sweep (not shown in Fig. 3), the means may be configured to tune the fast tuneable laser to the frequency of the optical frequency acquisition signal that is received first or identified first by the peak searching algorithm. This may depend on the order in which the frequency band is swept. The other ONUs may retransmit the optical frequency acquisition signal 301 and serial number PLOAM message 302 such that the OLT can determine the centre transmission frequency during a next sweep. If the OLT could not determine the centre transmission frequency of a joining ONU, this ONU can try again during the next quiet window.

By repeatedly scanning 311, 312, 313 the frequency band during the quiet window 303, the optical frequency acquisition signal 301 can thus be detected, and the centre transmission frequency of a joining ONU can be determined without prior knowledge on the transmission frequency of the ONU. In doing so, new ONUs using cheap non-deterministic lasers can join a PON with an OLT implementing coherent reception. It is an advantage that the OLT does not require prior knowledge of the new ONUs centre transmission frequency.

The control unit may further be configured to assign the determined centre transmission frequency to an ONU, e.g. to the serial number of the ONU comprised within the serial number PLOAM message 302. This can be achieved by storing or saving the determined centre transmission frequency for a respective ONU such that future upstream optical signals from the ONU can be received by tuning the fast tuneable laser to the stored centre transmission frequency. For example, the determined centre transmission frequency for an ONU may be stored in a memory, e.g. in a look up table, where it is related to the serial number of the ONU. At the start of the next upstream transmission opportunity allocated to the ONU with said serial number, the means may tune the fast tuneable laser to the transmission frequency stored in the look up table. It will be apparent that 'assigning or storing the determined centre transmission frequency' may comprise assigning or storing the parameters or settings of the fast tuneable laser, e.g. voltage, current, and temperature, at the centre transmission frequency, as 'determining the centre transmission frequency' may refer to obtaining the parameters of the fast tuneable laser corresponding to the centre transmission frequency without obtaining an explicit frequency value, e.g. expressed in Hz, for the centre transmission frequency. Thus, the centre transmission frequency of an ONU may be assigned to an ONU by storing the parameters or settings of the fast tuneable laser when the monitored parameter value exceeds the upper threshold or drops below the lower threshold in a memory, where it is related to an identifier of the ONU, e.g. the serial number.

The optical frequency acquisition signal 301 may have a time duration 304 that is larger than a scanning time 316 for scanning the entire frequency band 141. The time duration 304 of the optical frequency acquisition signal 301 may, for example, be four times larger than the scanning time 316 for scanning the entire frequency band 141. For example, the scanning time of a 400GHz frequency band 141 may be 200ns if the frequency of the fast tuneable laser can be adjusted every 2ns and the scanning accuracy is 2GHz. In this example, the time duration 304 of the optical frequency acquisition signal 301 may thus preferably be 800ns. This allows avoiding that the optical acquisition signals 301 are missed by the scanning 311, 312, 313 of the OLT.

A conflict may occur between the optical frequency acquisition signals of two or more ONUs during the quiet window, i.e. when the two or more ONUs are located at a similar distance to the OLT and transmit an optical frequency acquisition signal at the same centre transmission frequency or similar centre transmission frequency. To avoid this, one or more ONUs may be configured to add a random time delay to the transmission of the optical frequency acquisition signal such that the signal do not arrive simultaneously at the OLT. Alternatively, one or more ONUs may be configured to add a random frequency shift to the optical frequency acquisition signal to distinguish the signals at the OLT. This can be achieved by introducing a relatively small change in the laser parameters, e.g. voltage, current, or temperature. It will be apparent that the random frequency shift applied during the quiet window should also be applied to the subsequent transmissions between the ONU and the OLT.

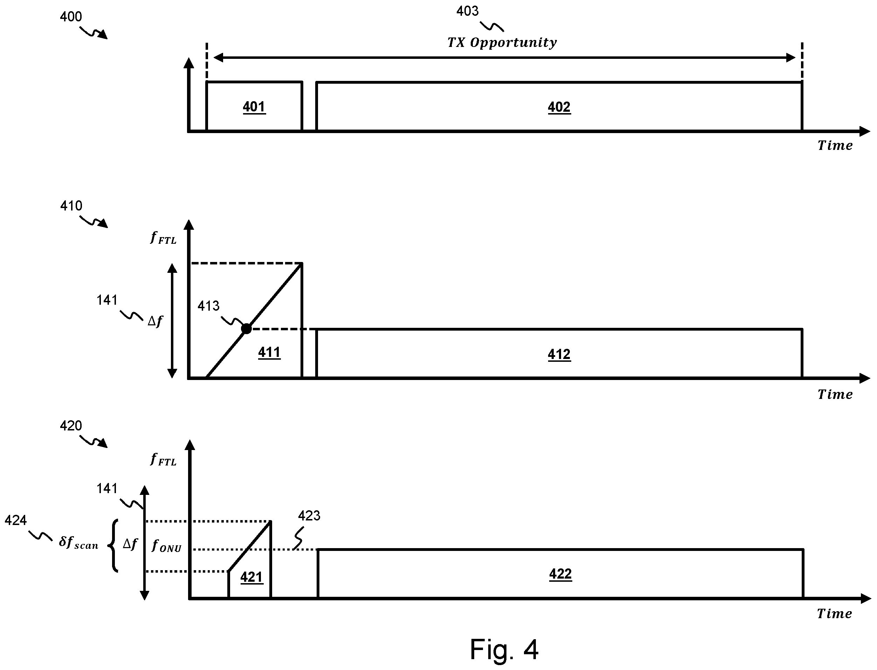

Fig. 4 shows an example embodiment of determining the centre transmission frequency of an existing ONU within a PON. The ONUs may be configured to transmit an optical frequency acquisition signal 401 before some or all of the upstream optical signals 402. The OLT may be configured to scan 411 the frequency band 141 at the start of an upstream transmission opportunity 403 allocated to a certain ONU. In doing so, the OLT can determine the centre transmission frequency of the subsequent upstream optical signal 402. This is advantageous because it enable reliable coherent reception at the OLT even if the centre transmission frequency of an ONU varies between subsequently transmitted upstream optical signals 402 by the same ONU, e.g. by changing temperatures.

This is illustrated by graph 410 in Fig. 4, which shows the frequency *f_{FTL}* to which the fast tuneable laser is tuned as a function of time during an upstream transmission opportunity 403. The control unit of the OLT may scan 411 the frequency band 141 by tuning the frequency of the fast tuneable laser *f_{FTL}* to the respective frequencies within the frequency band 141. The control unit may further obtain the parameter value at the respective frequencies.

The scanning 411 of the frequency band 141 may be interrupted when the parameter value exceeds an upper threshold or drops below a lower threshold. The OLT may thus be configured to scan 411 the frequency band 141 for the optical frequency acquisition signal 401 until it is detected. As the frequency to which the fast tuneable laser is tuned at that time corresponds to the transmission frequency of the ONU, the OLT may be configured to stop scanning the frequency band by maintaining the frequency of the fast tuneable laser at the determined centre transmission frequency of the ONU. For example, the scanning 411 may be interrupted at point 413 by maintaining the associated *f_{FTL}.* This allows receiving the upstream optical signal 402 transmitted by the ONU following the optical frequency acquisition signal 401.

Alternatively, the control unit may determine the centre transmission frequency of the ONU after completing a scan 411 of the frequency band 141. During a frequency band scan 411 or sweep, the control unit may log the obtained parameter values. After completing the scan 411, a peak searching algorithm may be executed on the obtained parameter values to identify a peak which corresponds to receiving an optical frequency acquisition signal 401. Depending on the parameter value that is monitored, the peak searching may be performed on the logged parameter values or on the additive inverse of the logged parameter values. After completing a sweep 411 during which a single optical frequency acquisition signal 401 is detected, the control unit may set the frequency of the fast tuneable laser to the determined centre transmission frequency to receive 412 the upstream optical signal 402.

The control unit may also be configured to only scan 421 a portion 424 of the frequency band rather than the entire frequency band 141. The scanned portion 424 of the frequency band 141 may envelop or surround a known centre transmission frequency of an ONU, e.g. a centre transmission frequency previously assigned to the ONU associated with transmission opportunity 403 during the ranging process. Thus, at the start of an upstream transmission opportunity 403 allocated to a certain ONU, the control unit may scan 421 some frequencies around the centre transmission frequency 423 previously assigned to said ONU and configure the fast tuneable laser to receive the subsequent optical signal at the newly determined centre transmission frequency. This allows determining the centre transmission frequency of the subsequent upstream optical signal without scanning the entire frequency band, which is faster and more efficient. This has the advantage that reliable coherent reception is possible even if the centre transmission frequency of the ONU changes between subsequent transmission, e.g. due to changes in ambient temperature.

After determining the centre transmission frequency of an ONU at the start of a transmission opportunity 403, the control unit may further be configured to update the centre transmission frequency previously assigned to the ONU, e.g. if the centre transmission frequency has changed. In other words, the means may be configured to adjust or overwrite the centre transmission frequency of an ONU stored within the memory to the latest determined centre transmission frequency for the ONU.

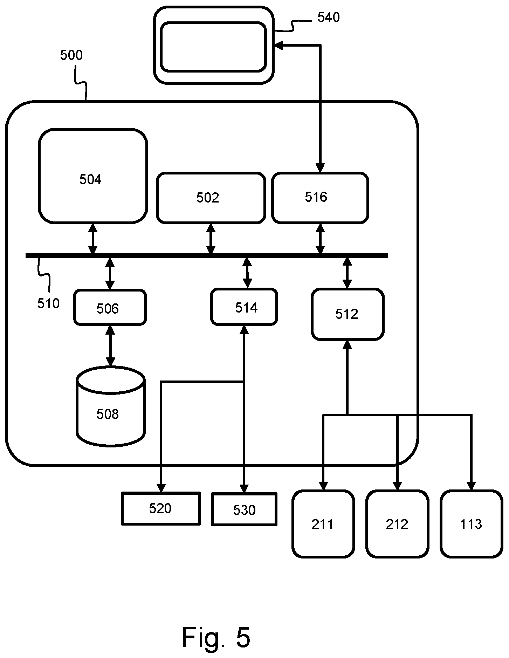

Fig. 5 shows a suitable computing system 500 enabling to implement embodiments of the computer-implemented method for determining a centre transmission frequency of one or more ONUs. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example a fast tuneable laser 212, means 113 for obtaining the parameter values indicative of electrical power of the converted electrical signal 214, or a coherent optical receiver 211. The communication interface 512 of computing system 500 may be connected to such a source node or destination node by means of a local area network (LAN) or a wide area network (WAN) such as for example the internet. Storage element interface 06 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, ROM, disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical line terminal, OLT (210), configured to communicate in a passive optical network, PON (200), with optical network units, ONUs (131 - 133) that transmit optical signals to the OLT at **respective centre transmission frequencies (142, 143, 144)** anywhere within **a frequency band (141);** wherein the OLT (210) comprises **a coherent optical receiver (211)** and **a fast tuneable laser (212),** wherein the coherent optical receiver is configured to convert received optical signals (213, 220) to **electrical signals (214)** by means of **a local oscillator laser signal (217)** generated by the fast tuneable laser; wherein the OLT (210) is configured to receive, from one or more ONUs (131 - 133), **an optical frequency acquisition signal (221)** transmitted at the respective centre transmission frequencies (142 - 144);
and wherein the OLT further comprises means (202) configured to perform:
- tuning (216) the fast tuneable laser (212) to respective frequencies (231) within the frequency band (141) to scan (230) the frequency band for optical frequency acquisition signals (221);
- obtaining (215), at the respective frequencies (231), **a parameter value** indicative of an electrical power (240) of the electrical signal (214) converted by the coherent optical receiver (211); and
- determining the respective centre transmission frequencies (142 - 144) of the one or more ONUs as the frequency to which the fast tuneable laser (212) is tuned when the parameter value exceeds **an upper threshold (241)** or drops below **a lower threshold.**

2. The optical line terminal, OLT, according to claim 1, wherein the means is further configured to perform interrupting the scanning (230) of the frequency band when the parameter value exceeds the upper threshold (241) or drops below the lower threshold so as to receive **an upstream optical signal (222)** transmitted by the ONU subsequent to the optical frequency acquisition signal (221).

3. The optical line terminal, OLT, according to claim 1, wherein the means is further configured to perform determining the respective centre transmission frequencies (142 -144) of the one or more ONUs (131 -133) by peak searching the obtained parameter values after tuning (216) the fast tuneable laser (212) to the respective frequencies (231) within the frequency band (141).

4. The optical line terminal, OLT, according to any of the preceding claims, wherein the means is further configured to scan (311, 312, 313, 315) the frequency band (141) repeatedly during **a quiet window (303).**

5. The optical line terminal, OLT, according to any of the preceding claims, wherein the means is further configured to scan (411) at least a portion of the frequency band (141) at the start of **an upstream transmission opportunity (403)** allocated to a respective ONU.

6. The optical line terminal, OLT, according to any of the preceding claims, wherein the means is further configured to perform assigning a determined centre transmission frequency (142 - 144) to an ONU (131 - 133) for receiving future upstream optical signals from the ONU transmitted at the centre transmission frequency.

7. The optical line terminal, OLT, according to claim 5 and 6, wherein the means is further configured to scan a portion (424) of the frequency band (141) enveloping the centre transmission frequency (423) previously assigned to the ONU allocated to the upstream transmission opportunity (403).

8. The optical line terminal, OLT, according to claim 7, wherein the means is further configured to perform updating the centre transmission frequency assigned to the ONU.

9. The optical line terminal, OLT, according to any of the preceding claims, wherein the optical frequency acquisition signal (301) has a time duration (304) that is larger than **a scanning time (316)** for scanning the entire frequency band (141).

10. The optical line terminal, OLT, according to any of the preceding claims, wherein the optical frequency acquisition signal is **a continuous wave signal.**

11. An optical network unit, ONU (131), configured to communicate in a passive optical network, PON (200), with an optical line terminal, OLT (210); wherein the ONU is configured to transmit optical signals (220) to the OLT at a centre transmission frequency (143) anywhere within a frequency band (141); and wherein the ONU is further configured to transmit, preceding an upstream optical signal (222), **an optical frequency acquisition signal (221)** for determining, by the OLT, the centre transmission frequency (143) of a subsequent upstream optical signal (222).

12. The optical network unit, ONU, according to claim 11, further configured to transmit the subsequent upstream optical signal **a waiting period** after completing the transmission of the optical frequency acquisition signal.

13. The ONU according to claim 11 or 12, further configured to transmit the optical frequency acquisition signal with **a random delay,** or to transmit the optical frequency acquisition signal with **a random frequency shift.**

14. A computer-implemented method for determining a centre transmission frequency (142 - 144) of one or more optical network units, ONUs (131 - 133), in a passive optical network, PON (200); wherein the one or more ONUs transmit optical signals to an optical line terminal, OLT (210), at respective centre transmission frequencies anywhere within a frequency band (141); and wherein the OLT (200) comprises **a coherent optical receiver (211)** and **a fast tuneable laser (212),** wherein the coherent optical receiver is configured to convert received optical signals (213, 220) to **electrical signals (214)** by means of **a local oscillator laser signal (217)** generated by the fast tuneable laser; and wherein the ONUs are further configured to transmit, preceding an upstream optical signal (222), **an optical frequency acquisition signal (221)** for determining, by the OLT, the centre transmission frequency (143) of a subsequent upstream optical signal (222); the computer-implemented method comprising:
- tuning (216) the fast tuneable laser (212) to respective frequencies (231) within the frequency band (141);
- obtaining (215), at the respective frequencies (231), a parameter value indicative of an electrical power (242 - 244) of the electrical signal (214) converted by the coherent optical receiver (211);
- determining a centre transmission frequency as the frequency to which the fast tuneable laser (212) is tuned when the electrical power (242 - 244) exceeds **an upper threshold (241)** or drops below **a lower threshold.**

15. A data processing system configured to perform the computer-implemented method according to claim 14.
